Europäisches Patentamt

European Patent Office

Office européen des brevets

(19)

(11) Veröffentlichungsnummer: **0 206 168**
A2

# (12) EUROPÄISCHE PATENTANMELDUNG

(21) Anmeldenummer: **86108097.6**

(22) Anmeldetag: **13.06.86**

(51) Int. Cl.⁴: **C 08 K 11/00, C 08 K 7/02**

(30) Priorität: **25.06.85 DE 3522628**

(43) Veröffentlichungstag der Anmeldung: **30.12.86**
**Patentblatt 86/52**

(84) Benannte Vertragsstaaten: **AT DE FR GB NL**

(71) Anmelder: **BAYER AG, Konzernverwaltung RP**
**Patentabteilung, D-5090 Leverkusen 1 Bayerwerk (DE)**

(72) Erfinder: **Westerkamp, Aloys, Dr., Auf der Höhe 47,**
**D-5060 Berglsch Gladbach (DE)**
Erfinder: **Cramm, Günther, Dr., Am Sonnenhang 38,**
**D-5090 Leverkusen 3 (DE)**

(54) **Stabillsierte wässrige Lösungen und/oder Dispersionen von Polymeren, deren Herstellung und Verwendung.**

(57) Stabilisierte wäßrige Polymerlösungen und -dispersionen, die Produkte enthalten, die durch Umsetzung von Alkanolaminen mit Ammoniak in Gegenwart von Wasserstoff und Katalysatoren zu Diaminen und nachfolgender Abtrennung von unumgesetzten Einsatzmaterialien, Wasser und gebildetem Diamin zugänglich sind, sowie die Verwendung solcher Produkte zur Stabilisierung von wäßrigen Polymerlösungen und/oder -dispersionen und die Verwendung so stabilisierter Polymerlösungen und/oder -dispersionen bei der Gewinnung von Erdöl.

EP 0 206 168 A2

BAYER AKTIENGESELLSCHAFT        5090 Leverkusen, Bayerwerk
Konzernverwaltung RP
Patentabteilung                 Gai/m-c


Stabilisierte wäßrige Lösungen und/oder Dispersionen von
Polymeren, deren Herstellung und Verwendung


Die vorliegende Erfindung betrifft mit speziellen Produkten stabilisierte wäßrige Lösungen und/oder Dispersionen von Polymeren, deren Herstellung durch Mischung von Polymeren, Wasser und gegebenenfalls weiteren Zusatzstoffen wie sie z.B. in G.R. Gray, Composition of Drilling Fluids, Fourth Edition 1980, S. 526-586, beschrieben werden, mit dem speziellen Produkt und deren Verwendung bei der Gewinnung von Erdöl.

Ein Einsatzgebiet von wäßrigen Lösungen und/oder Dispersionen von Polymeren bei der Gewinnung von Erdöl ist die Niederbringung und Behandlung von Bohrlöchern. Gegebenenfalls kann man solchen Lösungen und/oder Dispersionen durch Zusatz von Additiven bestimmte Eigenschaften verleihen, z.B. hinsichtlich ihres rheologischen Verhaltens, ihrer Viskosität, Gelstärke, Suspendierfähigkeit für feste Zusätze und Verminderung von Wasserverlusten durch Abfiltration in poröse Formationen. Entsprechend eingestellte Lösungen und/oder Dispersionen können dann beispielsweise als Spülflüssigkeit, insbesondere als wasserbasische Tiefbohrspülungen, Frac-Flüssigkeiten oder Workover-Fluids verwendet werden.

Le A 23 740-Ausland

0206168

Als Polymere werden dabei im allgemeinen Cellulosederivate, Polysaccharide und/oder Guar Gumme eingesetzt. Diese unterliegen jedoch unter den in Bohrlöchern herrschenden Anwendungsbedingungen leicht einem thermischen Abbau, der die Eigenschaften der Lösungen und/oder Dispersionen negativ beeinflußt. Solche Eigenschaftsänderungen, z.B. Viskositätsabnahmen, treten bei Hydroxyethylcellullulose enthaltenden Spülflüssigkeiten bereits bei Temperaturen von etwa 80°C an auf, bei Carboxymethylcellulose oder Xanthane enthaltenden Spülflüssigkeiten bei Temperaturen von etwa 100°C an. Bei derartigen Flüssigkeiten ist es deshalb erforderlich, laufend Polymere nachzudosieren, um das Eigenschaftsbild der Lösungen und/oder Dispersionen über längere Zeit aufrechtzuerhalten.

Es ist schon vorgeschlagen worden, die Temperaturbeständigkeit von wäßrigen Polysaccharid-Lösungen durch bestimmte Zusätze zu verbessern.

Gemäß der DE-OS 2 715 026 soll der Zusatz einer Kombination aus einem schwefelhaltigen Antioxidans und einem leicht oxidierbaren Alkohol wirksam sein. Die Tests wurden bei 97°C durchgeführt. Für höhere Temperaturen und eine alkalische Umgebung, wie sie bei Tiefbohrungen vorkommen, sind solche Stabilisatoren jedoch nicht brauchbar, da dann die Schwefelverbindungen abgebaut werden und die Alkohole langsam entweichen.

In der US-PS 3 953 335 wird Magnesia als Zusatz zu solchen Bohrflüssigkeiten vorgeschlagen, die keine Tone enthalten. Neben dieser bechränkten Anwendbarkeit des Magnesia-Zu-

Le A 23 740

0206168

satzes ist auch hier nur eine mäßige Temperaturstabilität gegeben.

In den SU-PS'en 402 633, 730 786 und 1 039 949 werden Mono-, Di- und Triethanolamin, sowie komplexe Gemische, die entweder Ethanolamin und Harnstoff, oder Phenol, Harnstoff und Tone, oder Borax, Ethanolamin, Harnstoff und Ethanol, oder Tallöldestillate und komplexe Triethanolaminether enthalten als Stabilisatoren vorgeschlagen. Die stabilisierende Wirkung dieser Additive ist jedoch gering (s. Beispiel 8). Zudem sind die verwendeten Zusätze relativ teuer und, soweit es sich um komplexe Gemische handelt, wegen komplizierter und mehrfacher Dosierungen umständlich und unwirtschaftlich.

Es besteht demnach noch immer ein Bedürfnis nach einem einfachen, preisgünstigen und trotzdem gut wirksamen Stabilisator für wäßrige Polymerlösungen und/oder -dispersionen.

Es wurden nun stabilisierte wäßrige Polymerlösungen und/oder -dispersionen gefunden, die dadurch gekennzeichnet sind, daß sie ein Produkt enthalten, das erhältlich ist, indem man in an sich bekannter Weise Alkanolamine mit Ammoniak in Gegenwart von Wasserstoff und Katalysatoren zu Diaminen umsetzt und anschließend aus dem Reaktionsgemisch unumgesetzte Einsatzmaterialien, Wasser und das gebildete Diamin abdestilliert.

Die Herstellung von Diaminen aus Alkanolaminen mit Ammoniak in Gegenwart von Wasserstoff und Katalysatoren ist

Le A 23 740

0206168

bekannt (siehe z.B. Ullmann's Enzyklopädie der technischen Chemie, 4. Auflage, Band VII, Seiten 380-383 (1974), DE-AS 1 172 268 und US-PS 2 861 995).

Dabei können Alkanolamine mit beispielsweise 2 - 10 C-Atomen, wie Ethanolamin, Isopropanolamin, 1,4-Butanolamin, 1,6-Hexanolamin oder 1,8-Octanolamin, mit überschüssigem Ammoniak, beispielsweise 3 bis 150 Molen Ammoniak/Mol Alkanolamin, in Gegenwart von Wasserstoff, beispielsweise 5 bis 100 l Wasserstoff/Mol Alkanolamin in Gegenwart von Katalysatoren, beispielsweise Hydrierkatalysatoren, die Kobalt, Nickel, Kupfer, Silber, Mangan, Eisen, Platin und/oder Palladium in elementarer Form oder in Form von Sauerstoffverbindungen oder Chromite enthalten, bei erhöhter Temperatur, beispielsweise bei 150 bis 300°C und erhöhtem Druck, beispielsweise bei 10 bis 500 bar, miteinander umgesetzt werden. Aus den so erhaltenen Reaktionsgemischen werden im allgemeinen durch Druckentspannung nicht umgesetztes Ammoniak, durch Destillation bei Normaldruck oder schwach erniedrigtem Druck, beispielsweise bei 1 bis 0,1 bar, gebildetes Diamin und Wasser und durch Destillation bei schwach oder stärker vermindertem Druck, beispielsweise bei 500 bis 10 mbar, nicht umgesetztes Alkanolamin abgetrennt. Danach verbleibt ein Destillationsrückstand, für den bisher keine technische Verwertungsmöglichkeit bekannt ist. Er wird deshalb bisher in Deponien eingelagert oder bei hohen Temperaturen verbrannt.

Da eine Reihe von Diaminen auf die zuvor beschriebene Weise großtechnisch hergestellt werden, z.B. Ethylendi-

Le A 23 740

amin, 1,2-Propylendiamin und 1,6-Hexamethylendiamin, fallen große Mengen solcher Destillationsrückstände an, die nunmehr im Rahmen der vorliegenden Erfindung einer technischen Verwertung zugeführt werden können.

Die erfindungsgemäß stabilisierten wäßrigen Polymerlösungen und/oder -dispersionen können Destillationsrückstände der beschriebenen Art beispielsweise in Mengen von 0,001 bis 3,0 Gew.-% enthalten. Vorzugsweise beträgt dieser Gehalt 0,1 bis 1,0 Gew.-%.

Vorzugsweise enthalten die erfindungsgemäß stabilisierten wäßrigen Polymerlösungen und/oder -dispersionen Destillationsrückstände aus der Herstellung von Ethylendiamin oder 1,2 Propylendiamin duch katalytische Aminierung von Ethanolamin oder Isopropanolamin.

Die sonstigen Bestandteile der erfindungsgemäß stabilisierten wäßrigen Polymerlösungen und/oder -dispersionen können dem Stand der Technik entsprechen. Beispielsweise können als Polymere Cellulosederivate, wie Hydroxyethylcellulose und Carboxymethylcellulose, Polysaccharide wie Xanthane und Stärken, oder Guar Gumme enthalten sein, beispielsweise in Mengen von 0,01 bis 5,0 Gew.-%.

Bei den erfindungsgemäß stabilisierten wäßrigen Polymerlösungen und/oder -dispersionen kann das darin enthaltene Wasser von beliebiger Art sein. Beispielsweise kann es sich um Trinkwasser, Brauchwasser, Oberflächenwasser, und/oder Meerwasser und/oder Lagerstättenwaser handeln.

Le A 23 740

0206168

Es können auch weitere Zusätze enthalten sein, beispielsweise 0 - 10 Gew.-% Tone wie Bentonit oder Attapulgit: 0 - 10 Gew.-% Bohrklein oder erbohrte Tone: 0 - 30 Gew.-% Barit, Ilmenit oder Eisenoxid, 0 - 30 Gew.-% Sand oder sog. Proppants wie Bauxit: Salze wie Kaliumchlorid, Natriumchlorid, Calciumchlorid u.a. von 0 - 40 Gew.-%: ferner Gleitmittel, Korrosionsschutzadditive und Bakterizide, z.B. Sulfite oder quaternäre Ammoniumverbindungen und weitere in Bohrloch-Spülflüssigkeiten, Workover-Fluids und Frac-Flüssigkeiten üblicherweise eingesetzte Additive.

Die vorliegende Erfindung betrifft weiterhin ein Verfahren zur Herstellung von stabilisierten wäßrigen Polymerlösungen und/oder -dispersionen, das dadurch gekennzeichnet ist, daß man wäßrige Polymerlösungen und/oder -dispersionen, die gegebenenfalls übliche Zusätze enthalten, mit 0,001 bis 3,0 Gew.-% eines Produktes mischt, das erhältlich ist, indem man in an sich bekannter Weise Alkanolamine mit Ammoniak in Gegenwart von Wasserstoff und Katalysatoren zu Diaminen umsetzt und anschließend aus dem Reaktionsgemisch unumgesetzte Einsatzmaterialien, Wasser und das gebildete Diamin abdestilliert.

Die vorliegende Erfindung betrifft weiterhin die Verwendung des Produktes, das erhältlich ist, indem man in an sich bekannter Weise Alkanolamine mit Ammoniak in Gegenwart von Wasserstoff und Katalysatoren zu Diaminen umsetzt und anschließend aus dem Reaktionsgemisch unumgesetzte

Le A 23 740

Einsatzmaterialien, Wasser und das gebildete Diamin abdestilliert, zur Stabilisierung von wäßrigen Polymerlösungen und/oder -dispersionen.

Schließlich betrifft die vorliegende Erfindung die Verwendung von stabilisierten wäßrigen Polymerlösungen und/oder -dispersionen, die ein Produkt enthalten, das erhältlich ist, indem man in an sich bekannter Weise Alkanolamine mit Ammoniak in Gegenwart von Wasserstoff und Katalysatoren zu Diaminen umsetzt und anschließend aus dem Reaktionsgemisch unumgesetzte Einsatzmaterialien, Wasser und das gebildete Diamin abdestilliert, bei der Gewinnung von Erdöl, insbesondere bei der Niederbringung und Behandlung von Bohrlöchern.

Bei dem erfindungsgemäßen Verfahren zur Herstellung stabilisierter wäßriger Polymerlösungen und/oder -dispersionen und bei der erfindungsgemäßen Verwendung solcher Polymerlösungen und/oder -dispersionen sind die gleichen Produkte einsetzbar und die gleichen Maßnahmen bevorzugt, wie zuvor bei den erfindungsgemäß stabilisierten wäßrigen Polymerlösungen und/oder -dispersionen beschrieben.

Die vorliegende Erfindung zeichnet sich dadurch aus, daß bisher technisch nicht verwertbare Produkte einer technischen Verwendung zugeführt werden. Die erfindungsgemäß stabilisierten wäßrigen Polymerlösungen und/oder -dispersionen sind in der Regel bis zu etwa 160°C und höher stabil. Sie sind deshalb gegenüber den bisher bekannten stabilisierten wäßrigen Polymerlösungen und/oder -disper-

Le A 23 740

0206168

sionen in technischer und/oder ökonomischer Hinsicht überlegen.

Die folgenden Beispiele erläutern die Erfindung, ohne sie in irgendeiner Weise zu beschränken.

**Le A 23 740**

Beispiele

Beispiel 1

700 g Isopropanolamin, 400 g Ammoniak und 10 l Wasserstoff wurden bei 190°C und bei einem Druck von 160 bar stündlich durch einen mit 1600 g Raney-Nickel gefüllten Kontaktofen gepumpt. Anschließend wurde aus dem Reaktionsgemisch unter Druck das überschüssige Ammoniak, bei Normaldruck 1,2-Propylendiamin und das Reaktionswasser, sowie bei 100 mbar nicht umgesetztes Isopropanolamin abdestilliert. Es hinterblieben pro Stunde 100 g Destillationsrückstand.

Beispiel 2

12,5 g handelsübliches Xanthan wurden in 1000 g Meerwasser (gemäß DIN 50900) unter Rühren eingestreut. Nach einer Quellzeit von 16 Stunden bei Raumtemperatur wurde die Viskosität der Lösung in einem Brookfield Viskositätsmeter vom Typ LVTD bei 60 Upm gemessen.

Danach wurde die Lösung in vier gleiche Teile geteilt. Zu drei Teilen wurden jeweils 1,0 Gew.-% des gemäß Beispiel 1 erhaltenen Destillationsrückstandes gegeben, dem vierten Teil wurde 1,0 Gew.-% Wasser zugesetzt.

Die so hergestellten Lösungen wurden in Stahlbomben gefüllt und verschieden lange bei 120°C gerollt.

Nach dem Abkühlen wurden die Lösungen kurz gerührt und erneut die Brookfield-Viskosität gemessen. Die Ergebnisse sind aus Tabelle 1 ersichtlich.

Le A 23 740

**Beispiel 3**

Beispiel 2 wurde wiederholt, jedoch wurden die Stahlbomben bei 140°C gerollt. Die Ergebnisse sind aus Tabelle 1 ersichtlich.

**Beispiel 4**

Beispiel 3 wurde wiederholt, jedoch wurden nur 0,5 Gew.-% des nach Beispiel 1 erhaltenen Destillationsrückstands zugesetzt. Die Ergebnisse sind aus Tabelle 1 ersichtlich.

**Beispiel 5**

Beispiel 2 wurde wiederholt, jedoch wurden die Stahlbomben bei 160°C gerollt. Die Ergebnisse sind aus Tabelle 1 ersichtlich.

Le A 23 740

Tabelle 1

| Beispiel Nr. | Dosierung (Gew.-%) | Temperatur (°C) | | | Rollzeit (h) | Viskosität (mPa.s) |
|---|---|---|---|---|---|---|
| 2 | 0 | vor | dem | Rollen | | 2500*) |
| 2 | 0 | 120 | | | 16 | 2400*) |
| 2 | 0 | 120 | | | 40 | 2000*) |
| 2 | 0 | 120 | | | 64 | 1490*) |
| 2 | 1,0 | vor | dem | Rollen | | 2450 |
| 2 | 1,0 | 120 | | | 16 | 2400 |
| 2 | 1,0 | 120 | | | 40 | 2400 |
| 2 | 1,0 | 120 | | | 64 | 2400 |
| 3 | 0 | vor | dem | Rollen | | 2500*) |
| 3 | 0 | 140 | | | 16 | 20*) |
| 3 | 0 | 140 | | | 40 | 10*) |
| 3 | 0 | 140 | | | 64 | 5*) |
| 4 | 0,5 | vor | dem | Rollen | | 2500 |
| 4 | 0,5 | 140 | | | 16 | 2150 |
| 4 | 0,5 | 140 | | | 40 | 1850 |
| 4 | 0,5 | 140 | | | 64 | 700 |
| 3 | 1,0 | vor | dem | Rollen | | 2500 |
| 3 | 1,0 | 140 | | | 16 | 2200 |
| 3 | 1,0 | 140 | | | 40 | 2150 |
| 3 | 1,0 | 140 | | | 64 | 1200 |
| 5 | 0 | vor | dem | Rollen | | 2500*) |
| 5 | 0 | 160 | | | 16 | 5*) |
| 5 | 0 | 160 | | | 40 | 5*) |
| 5 | 1,0 | vor | dem | Rollen | | 2500 |
| 5 | 1,0 | 160 | | | 16 | 285 |

*) Vergleichsbeispiel

Le A 23 740

## Beispiel 6

5 g handelsübliche Hydroxyethylcellulose wurden in 1 l synthetischem Meerwasser (nach DIN 50900) aufgelöst. Die erhaltene Lösung wurde in sechs gleiche Teile geteilt. Zwei dieser Teile wurden jeweils mit 1 Gew.-% des gemäß Beispiel 1 erhaltenen Destillationsrückstandes versetzt, zwei weitere Teile jeweils mit 2 Gew.-% Magnesiumoxid und die verbleibenden beiden Teile jeweils mit 1 Gew.-% Wasser. Danach wurde von den jeweils vorhandenen zwei identischen Ansätzen einer 168 Stunden (= 7 Tage) bei 100°C in einer geschlossenen Glasflasche und der andere 16 Stunden bei 150°C in einer Stahlbombe gelagert. Vor und nach der Wärmebehandlung wurde die Brookfield-Viskosität gemessen. Die Ergebnisse sind aus Tabelle 2 ersichtlich.

### Tabelle 2

| Stabilisatorzugabe | Thermische Behandlung (°C/Stunden) | Viskosität (mPa.s) |
|---|---|---|
| keine | vor der therm.Behandlung | 303*) |
| keine | 100/168 | 43*) |
| keine | 150/16 | 3*) |
| 1,0 Gew.-% A | 100/168 | 285 |
| 1,0 Gew.-% A | 150/16 | 19 |
| 2,0 Gew.-% B | 100/168 | 70*) |
| 2,0 Gew.-% B | 150/16 | 4*) |

A = erhalten gemäß Beispiel 1

B = Magnesiumoxid

*) Vergleichsbeispiele

Le A 23 740

Beispiel 7

Es wurden vier Ansätze folgender Zusammensetzung hergestellt:

160 g synthetisches Meerwasser,

160 g 12 gew.-%ige wäßrige KCl-Lösung,

80 g 20 gew.-%iges Bentonit-Gel in Süßwasser.

4 g Bohrstärke (Foragel S2)

4 g Xanthan,

0,8 g Carboxymethylcellulose (Antisol FL 100).

Zu drei dieser Ansätze wurde jeweils 1,0 Gew.-% des gemäß
Beispiel 1 erhaltenen Destillationsrückstandes zugefügt.
Danach wurden alle Ansätze in Stahlbomben gefüllt und bei
150°C unter Rollen gealtert.

Vor und nach der Alterung wurden Daten ermittelt, die für
Spülflüssigkeiten in Bohrlöchern von Bedeutung sind. Die
Ergebnisse sind aus Tabelle 3 ersichtlich.

Beispiel 8:

Zum Nachweis der überlegenen Stabilisator-Wirkung der erfindungsgemäß zu verwendenden Destillationsrückstände
gegenüber den in SU 1039 949 A beschriebenen Stabilisatormischungen wurde folgender Versuch durchgeführt:

18,75 g handelsübliches Xanthan wurden in 1500 g synthetisches Meerwasser (gemäß DIN 50900) unter Rühren eingestreut. Nach einer Quellzeit von 16 Std. bei Raumtemperatur wurde die Lösung in sechs gleiche Teile geteilt.

Zu zwei Proben wurde je 1 Gew.-% Meerwasser zugegeben.
Zwei weitere Proben wurden mit 1,0 Gew.-% des gemäß Beispiel 1 erhaltenen Destillationsrückstandes versetzt.
Le A 23 740

Die letzten beiden Proben wurden mit jeweils 1,0 Gew.-% einer Mischung aus 50 Gew.-% Tallöldestillat und 50 Gew.-% Triethanolamin-tris-Glykolether versetzt.

Dann wurden die Viskositäten der Lösung gemessen und die sechs Proben in Stahlbomben bei 140°C gealtert. Nach 48 Stunden und nach 75 Stunden wurden jeweils drei Bomben entnommen, abgekühlt und die Viskosität des Inhaltes gemessen.

Die Resultate in Tabelle 4 zeigen, daß lediglich durch den Zusatz des Destillationsrückstandes nach Beispiel 1 eine Stabilisierung erzielt wird.

Le A 23 740

# Tabelle 3

| Stabilisator-zugabe (Gew.%) | Alterungszeit (h) | Scheinbare Viskosität[*] (mPa.s) | Fließgrenze[*] (lbs/100sqft) | Gelstärken[*] 10" | 10' | API·Wasserverlust (ml) [*] |
|---|---|---|---|---|---|---|
| 0 | 0 | 58 | 72 | 35 | 51 | 7.0[**] |
| 1.0 | 0 | 56 | 57 | 32 | 49 | 6.5 |
| 0 | 6 | 37 | 52 | 13 | 19 | 7.5[**] |
| 1,0 | 6 | 42 | 60 | 19 | 26 | 7.0 |
| 0 | 24 | 5 | 2 | 1 | 1 | 10.5[**] |
| 1,0 | 24 | 32 | 35 | 5 | 9 | 8.5 |

[*]  Siehe G.R. Gray, Composition of Drilling Fluids, Fourth Edition 1980. S. 181 ff.
[**] Vergleichsbeispiele

0206168

Tabelle 4

| Stabilisatorzugabe<br>(Gew.-%) | Thermische Behandlung<br>(°C/Stunden) | Viskosität<br>(mPa's) |
|---|---|---|
| Keine | vor der therm. Behandlung | 2300 |
| 1,0 Gew.% A | " | 2300 |
| 1,0 Gew.% B | " | 2300 |
| Keine | 140/40 | 5 |
| 1,0 Gew.% A | 140/40 | 2100 |
| 1,0 Gew.% B | 140/40 | 50 |
| Keine | 140/75 | 5 |
| 1,0 Gew.% A | 140/75 | 190 |
| 1,0 Gew.% B | 140/75 | 5 |

A = erhalten gemäß Beispiel 1

B = Stabilisator-Mischung gemäß SU 1039 949 A (= Gemisch aus gleichen Gewichtsteilen Tallöldestillat und Tri-ethanolamintrisglykolether)

Le A 23 740

**Patentansprüche**

1.  Stabilisierte wäßrige Polymerlösungen und/oder -dispersionen, dadurch gekennzeichnet, daß sie ein Produkt enthalten, das erhältlich ist, indem man in an sich bekannter Weise Alkanolamine mit Ammoniak in Gegenwart von Wasserstoff und Katalysatoren zu Diaminen umsetzt und anschließend aus dem Reaktionsgemisch unumgesetzte Einsatzmaterialien, Wasser und das gebildete Diamin abdestilliert.

2.  Stabilisierte wäßrige Polymerlösungen und/oder -dispersionen nach Anspruch 1, dadurch gekennzeichnet, daß sie 0,001 bis 3,0 Gew.-% des Produktes enthalten.

3.  Stabilisierte wäßrige Polymerlösungen und/oder -dispersionen nach Ansprüchen 1 und 2, dadurch gekennnzeichnet, daß sie ein Produkt enthalten, das erhältlich ist, indem man in an sich bekannter Weise Ethanolamin oder Isopropanolamin durch katalytische Aminierung zu Ethylendiamin oder 1,2-Propylendiamin umsetzt.

4.  Stabilisierte wäßrige Polymerlösungen und/oder -dispersionen gemäß Ansprüchen 1 bis 3, dadurch gekennzeichnet, daß sie als Polymere Cellulosederivate, Polysaccharide oder Guar Gumme enthalten.

Le A 23 740

5. Stabilisierte wäßrige Polymerlösungen und/oder -dispersionen gemäß Ansprüchen 1 bis 4, dadurch gekennzeichnet, daß sie als weitere Zusätze 0-10 Gew.% Tone, 0-10 Gew.% Bohrklein oder erbohrte Tone, 0-30 Gew.% Barit, Ilmenit oder Eisenoxid, 0-30 Gew.% Sand oder Proppants, 0-40 Gew.% Salze, Gleitmittel, Korrosionsinhibitoren, Bakterizide und/oder weitere in Bohrlochspülflüssigkeiten, Frac-Flüssigkeiten und/oder Workover-Fluids übliche Additive enthalten.

6. Verfahren zur Herstellung von stabilisierten wäßrigen Polymerlösungen und/oder -dispersionen, dadurch gekennzeichnet, daß man wäßrige Polymerlösungen und/ oder -dispersionen, die gegebenenfalls übliche Zusätze enthalten, mit 0,001 bis 3,0 Gew.-% eines Produktes mischt, das erhältlich ist, indem man in an sich bekannter Weise Alkanolamine mit Ammoniak in Gegenwart von Wasserstoff und Katalysatoren zu Diaminen umsetzt und anschließend aus dem Reaktionsgemisch unumgesetzte Einsatzmaterialien, Wasser und das gebildete Diamin abdestilliert.

7. Verwendung des Produktes, das erhältlich ist, indem man in an sich bekannter Weise Alkanolamine mit Ammoniak in Gegenwart von Wasserstoff und Katalysatoren zu Diaminen umsetzt und anschließend aus dem Reaktionsgemisch unumgesetzte Einsatzmaterialien, Wasser und das gebildete Diamin abdestilliert, zur Stabilisierung von wäßrigen Polymerlösungen und/oder -dispersionen.

<u>Le A 23 740</u>

0206168

8. Verwendung von stabilisierten wäßrigen Polymerlösungen und/oder -dispersionen, die ein Produkt enthalten, das erhältlich ist, indem man in an sich bekannter Weise Alkanolamine mit Ammoniak in Gegenwart von Wasserstoff und Katalysatoren zu Diaminen umsetzt und anschließend aus dem Reaktionsgemisch unumgesetzte Einsatzmaterialien, Wasser und das gebildete Diamin abdestilliert, bei der Gewinnung von Erdöl.

9. Verwendung nach Anspruch 8, bei der Niederbringung und Behandlung von Bohrlöchern.

Le A 23 740